(19) Europäisches Patentamt
European Patent Office
Office européen des brevets

(11) **EP 2 050 186 B1**

(12) **EUROPÄISCHE PATENTSCHRIFT**

(45) Veröffentlichungstag und Bekanntmachung des Hinweises auf die Patenterteilung:
**21.12.2011 Patentblatt 2011/51**

(51) Int Cl.:
*H02P 21/00* (2006.01)    *H02P 23/00* (2006.01)
*H02P 6/00* (2006.01)

(21) Anmeldenummer: 07764973.9

(22) Anmeldetag: **30.06.2007**

(86) Internationale Anmeldenummer:
**PCT/EP2007/005813**

(87) Internationale Veröffentlichungsnummer:
**WO 2008/014855 (07.02.2008 Gazette 2008/06)**

(54) **ANTRIEB UND VERFAHREN**

DRIVE AND METHOD

MECANISME D'ENTRAINEMENT ET PROCEDE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **31.07.2006 DE 102006035891**

(43) Veröffentlichungstag der Anmeldung:
**22.04.2009 Patentblatt 2009/17**

(73) Patentinhaber: SEW-EURODRIVE GmbH & Co. KG
**76646 Bruchsal (DE)**

(72) Erfinder:
• **HAMMEL, Wolfgang**
**76646 Bruchsal (DE)**
• **SCHUSTER, Thomas**
**73113 Ottenbach (DE)**

(56) Entgegenhaltungen:
**DE-A1- 3 149 402    DE-A1- 10 300 953
DE-B1- 2 721 459**

**Beschreibung**

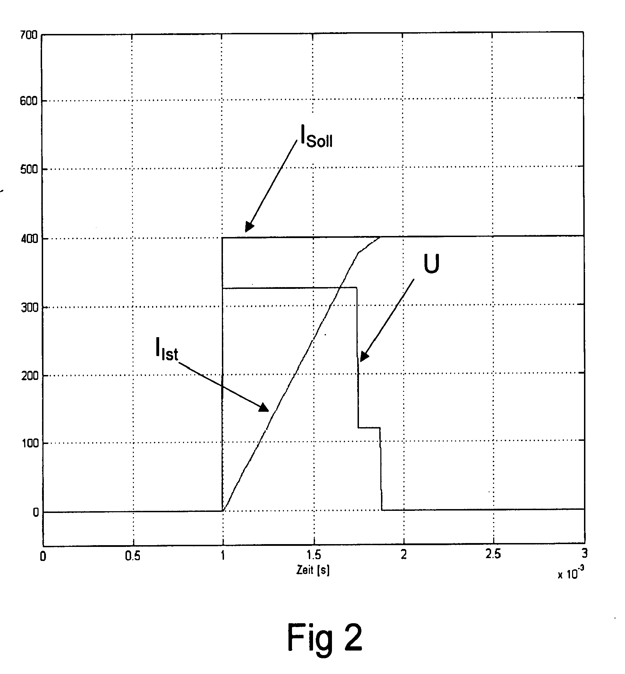

Aus der EP 0 179 356 ist ein Verfahren zur Regelung einer Drehfeldmaschine bekannt. Dabei wird gemäß dortiger Figur 2 der Strom und die Spannung am Motor erfasst. Dabei werden aus einer Reglerstruktur, die einer Modellbildung der Maschine entspricht, Komponenten des Istwerts des Flusses gebildet. Diese werden einem Flussregler zugeführt, dessen Ausgang die Schaltzustände des die Maschine versorgenden Wechselrichters als Stellgrößen beeinflusst.

Aus der DE 1 941 312 ist ein Verfahren zu Steuerung einer Asynchronmaschine bekannt, bei der Hallsensoren 3 verwendet werden.

Aus der DE 195 32 477 A1 ist ein Verfahren zum Anlassen einer Asynchronmaschine bekannt, bei dem zum Anlassen der Drehmomentsollwert Null vorgegeben wird.

Aus der DE 199 752 C1 ist ein Verfahren zum Zuschalten eines Umrichters an einen Asynchronmotor bekannt.

Aus der DE 103 00 953 A1 ist ein Umrichter bekannt, der eine Regelstruktur aufweist, die den Statorstrom des Motors mittels Stellen der am Motor anllegenden Spannung regelt, wobei der Strom des Motors erfasst wird, wobei die Regelstruktur einen ersten Regler umfasst, dessen Sollwert und dessen Istwert Ausgangswert eines nichtlinearen Übertragungsgliedes ist.

Der Erfindung liegt daher die Aufgabe zugrunde, die Regelungseigenschaften eines elektrischen Antriebs zu verbessern.

Erfindungsgemäß wird die Aufgabe bei dem Antrieb nach den in Anspruch 1 und bei dem Verfahren nach den in Anspruch 9 angegebenen Merkmalen gelöst.

Wichtige Merkmale der Erfindung bei dem Antrieb sind, dass er einen Elektromotor, der von einem Umrichter gespeist ist, umfasst,
wobei der Umrichter eine zeitdiskrete Regelstruktur umfasst, die den Statorstrom des Elektromotors mittels Stellen der am Motor anliegenden Spannung regelt,
wobei der Strom des Motors zeitdiskret erfasst wird,
wobei die Regelstruktur einen ersten Regler umfasst,
dessen Sollwert Ausgangswert eines ersten nichtlinearen Übertragungsgliedes
und dessen Istwert Ausgangswert eines zweiten nichtlinearen Übertragungsgliedes ist,
wobei der Eingangswert des ersten nichtlinearen Übertragungsgliedes der Sollwert einer ersten Stromkomponente des Stromes ist,
wobei der Eingangswert des zweiten nichtlinearen Übertragungsgliedes der Istwert einer ersten Stromkomponente des Stromes ist.

Von Vorteil ist dabei, dass das nichtlineare Übertragungsglied jeweils derart ausführbar ist, dass die Verschlechterung der Regeleigenschaften durch Stromabhängigkeiten der Motorparameter kompensierbar sind. Insbesondere durch Sättigung bewirkte Abweichungen der Parameter sind kompensierbar.

Bei einer vorteilhaften Ausgestaltung sind das erste und zweite nichtlineare Übertragungsglied gleichartig. Von Vorteil ist dabei, dass die gleichen physikalische Größe, wie beispielsweise Stromkomponente eines Stromvektors, bei den Eingangswerten verwendbar ist.

Bei einer vorteilhaften Ausgestaltung entspricht das nichtlineare Übertragungsglied einer Magnetisierungskennlinie des Motors. Von Vorteil ist dabei, dass somit die Stromabhängigkeit der Motorparameter invertierbar ist. Dabei Ist allerdings insbesondere wichtig, dass die Regelung zeitdiskret ausgeführt wird.

Bei einer vorteilhaften Ausgestaltung weist das nichtlineare Übertragungsglied eine Übertragungsfunktion der Form $\dot{\Phi}(I) = \int\limits_{i=0}^{I} L_{diff}(i)\,di$ auf, wobei I die Eingangsgröße des Gliedes ist. Von Vorteil ist dabei, dass auch bei zeitdiskreter Ausführung und dabei verwendeten großen Zeitschritten die Änderungen der Induktivität durch die während des Zeitschrittes bewirkten Stromänderungen im Wesentlichen berücksichtigt sind.

Bei einer vorteilhaften Ausgestaltung ist das nichtlineare Übertragungsglied eine Übertragungsfunktion die ein Funktional, insbesondere Integral, der stromabhängigen Induktivitätsfunktion des Motors. Von Vorteil ist dabei, dass der Ausgangswert des Gliedes schnell und einfach, also mit wenig Rechenaufwand bestimmbar ist. Es ist sogar eine entsprechende Tabelle hinterlegbar, die die Bestimmung des Ausgangswertes noch schneller und einfacher macht.

Bei einer vorteilhaften Ausgestaltung ist der Regler ein linearer Regler, wie P-Regler, ein PI-Regler oder ein PID-Regler. Von Vorteil ist dabei, dass bekannte Regler verwendbar sind. Somit ist der Aufwand zur Herstellung gering.

Außerdem ist eine Vorsteuerung zusätzlich vorteilig anwendbar.

Bei einer vorteilhaften Ausgestaltung werden aus dem erfassten Strom die Stromkomponenten in einem Koordinatensystem bestimmt. Von Vorteil ist dabei, dass die Transformierung in beliebige Systeme ausführbar ist. Vorzugsweise wird ein System gewählt, wo eine der Stromkomponenten flussbildend und eine andere drehmomentbildend ist.

Bei einer vorteilhaften Ausgestaltung umfasst der Umrichter für jede Stromkomponente eine Regelstruktur, die der Regelstruktur für die erste Stromkomponente gleicht. Von Vorteil ist dabei, dass die Stromkomponenten einheitlich behandelt werden. Außerdem ist der Aufwand zur Herstellung der Regelungssoftware gering.

Wichtige Merkmale der Erfindung bei dem Verfahren sind, dass es zur Regelung des Statorstromes bei einem von einem Umrichter gespeisten Elektromotor vorgesehen ist,
wobei das Verfahren zeitdiskret ausgeführt wird und der Statorstrom des Motors zeitdiskret erfasst wird,

wobei der Sollwert einer ersten Stromkomponente Eingangswert eines ersten nichtlinearen Übertragungsgliedes ist, dessen Ausgangswert einem Regler als Sollwert zugeführt wird,

wobei der Istwert einer ersten Stromkomponenten Eingangswert eines zweiten nichtlinearen Übertragungsgliedes ist, dessen Ausgangswert dem Regler als Istwert zugeführt wird,

wobei die Stellgröße des Reglers die am Motor anliegende Spannung ist.

Von Vorteil ist dabei, dass umrichtergespeiste Synchronmotorantriebe mit derart hoher Ausnutzung, dass der Strom die Induktivität des Motors wesentlich beeinflusst, sehr gute Regeleigenschaften erhalten.

Insbesondere ist die Regelstruktur skalar aufgebaut, also für jede Stromkomponente unabhängig von der Regelstruktur der anderen Stromkomponente. Dabei ist allerdings die Stellgröße Statorspannungsvektor je nach Koordinatensystem eine gemischte oder unabhängige Stellgröße.

Weitere Vorteile ergeben sich aus den Unteransprüchen.

**Bezugszeichenliste**

| I_Soll | Sollwert |
| I_Ist | Istwert |
| U | Spannung als Stellgröße |
| SR | Stromregler |
| SA | Stromabtastung |
| R | Regler |
| M | Motor |

Die Erfindung wird nun anhand von Abbildungen näher erläutert:

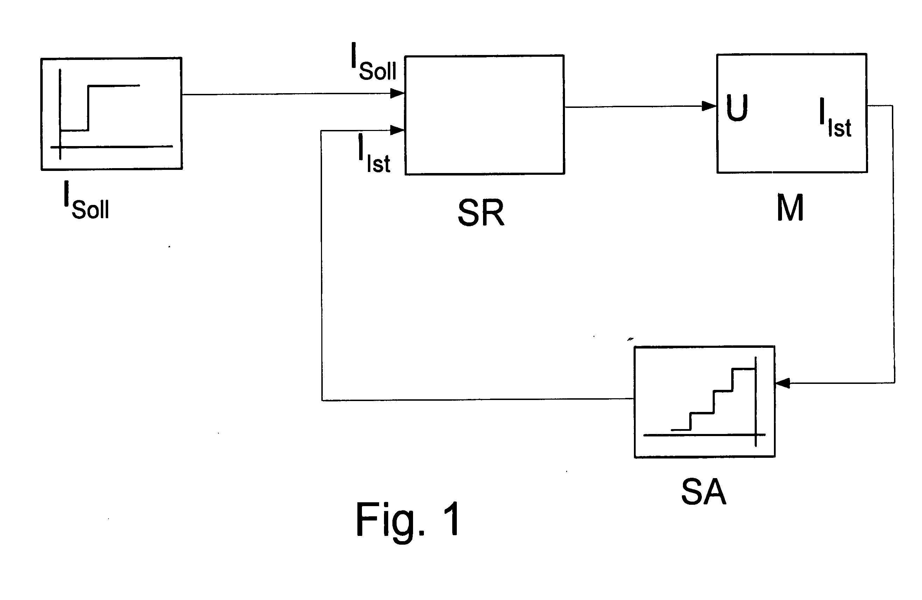

In der Figur 1 ist eine schematische Darstellung der Reglerstruktur gezeigt. Dabei wird an der Maschine, beispielhaft ein Elektromotor M, der Stromistwert I_Ist erfasst. Diese Erfassung erfolgt zeitdiskret, also zu jedem Zeitschritt des zeitdiskreten Reglers einmal.

Da der Strom der Maschine eine mehrdimensionale Größe ist, wenn die Maschine eine dreiphasige Versorgung aufweist, ist der Strom als Vektor darzustellen.

Dieser Vektor ist in einem Koordinatensystem darstellbar, wie Flusskoordinatensystem, Rotorkoordinatensystem oder dergleichen.

Der Stromistwert I_IST der Figuren ist dabei als Stromkomponente in diesem Koordinatensystem zu verstehen.

Bei mehreren Stromkomponenten ist für jede dieser Stromkomponenten eine Regelstruktur gemäß der Figuren anwendbar. Insbesondere ist sie jedoch auf jeden Fall auf die drehmomentbildende Stromkomponente als I_IST anwendbar.

Der Sollwert I_Soll und der Istwert I_IST werden dem Stromregler zugeführt, welcher die Stellgröße entsprechend der Regelabweichung verändert. Im vorliegenden Fall ist vorzugsweise die Spannung die genannte Stellgröße.

Figur 2 zeigt den Verlauf des Sollwertes, wobei ein Sprung vorgesehen ist. Dabei wird die Stellgrenze des Reglers erreicht. Somit sind mehrere Zeitschritte des zeitdiskreten Reglers notwendig bis die Nachführung des Istwertes abgeschlossen ist. Hierbei erfolgt die Nachführung schnellstmöglich.

Dabei wurde vorausgesetzt, dass die Regelstrecke, umfassend die Maschine M, ein lineares und integrierendes Verhalten besitzt, wie beispielsweise eine stromunabhängige Induktivität.

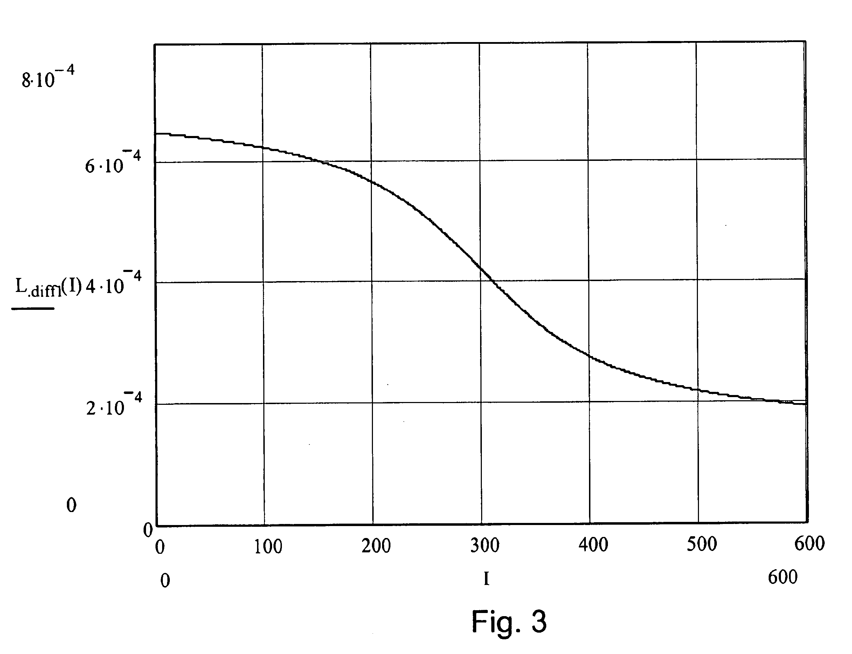

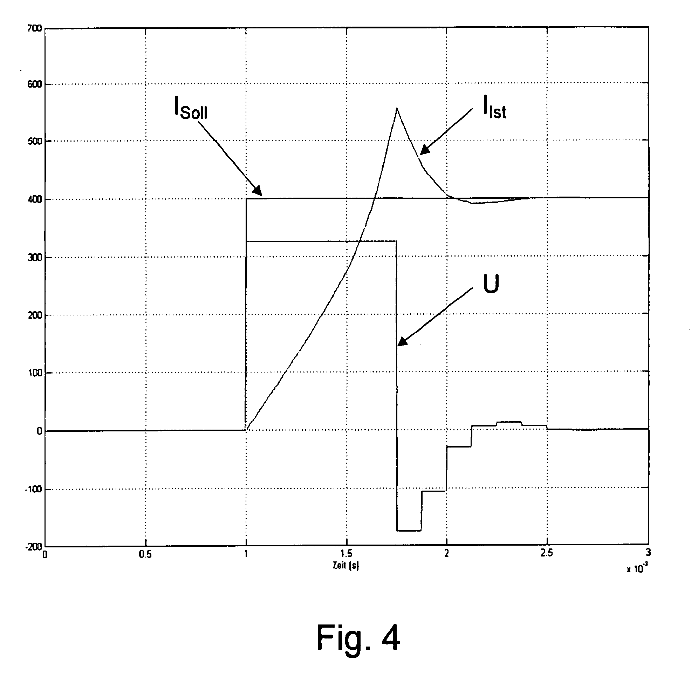

Wenn jedoch die Induktivität stromabhängig ist in der in Figur 3 dargestellten Form, ergeben sich die Verläufe nach Figur 4.

In Figur 3 nimmt der Wert der Induktivität nach Überschreiten der Sättigungsgrenze auf weniger als ein Drittel ab.

In Figur 4 ist der Sollwertverlauf I_Soll entsprechend der Figur 2 ausgeführt. Da wiederum die Stellgrenze für die Spannung als Stellwert überschritten wird, benötigt der Istwert des Stromes wiederum einige Zeitschritte der zeitdiskreten Regelung bis zum Erreichen des stationären Wertes. Allerdings tritt dabei ein Überschwingen auf, das die Stromgrenze des den Motor versorgenden Umrichters überschreiten kann. Dies kann dann zu einem Fehler und einer entsprechenden automatischen Abschaltung des Umrichters führen.

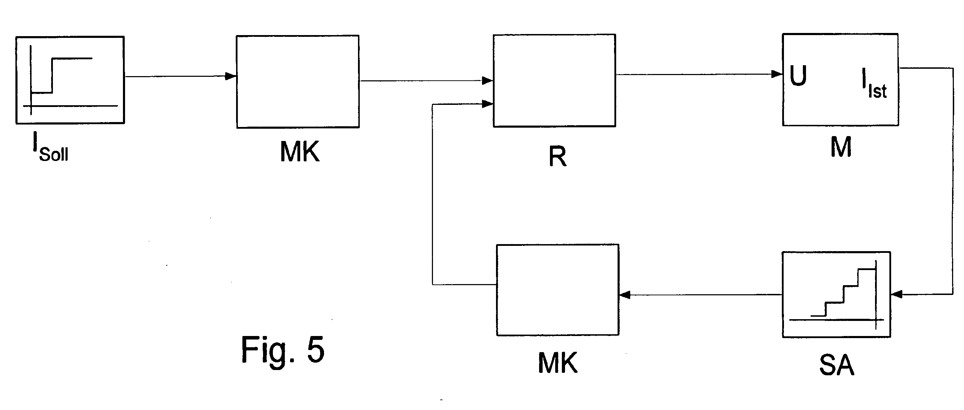

Bei dem erfindungsgemäßen Ausführungsbeispiel wird gemäß Figur 5 der mittels der zeitdiskreten Stromabtastung Strom erfasst, die Stromkomponente des Stromvektors bestimmt und einem nichtlinearen Übertragungsglied zugeführt. Der Sollwert I_Soll wird ebenfalls einem identischen nichtlinearen Übertragungsglied zugeführt.

Der Regler stellt dann abhängig von der Regelabweichung die Spannung des Motors.

Als nichtlineares Übertragungsglied wird

$$\Phi(I) = \int_{i=0}^{I} L_{diff}(i)\,di$$

verwendet, wobei I der Eingangswert des Gliedes ist, also I_Soll beziehungsweise I_Ist und $L_{diff}(i)$ die Stromabhängigkeit der Induktivität des Motors beschreibt.

Somit ist für die Stromkomponente, insbesondere die drehmomentbildende, ein skalarer Regler vorgesehen, der ohne großen Rechenaufwand realisierbar ist und somit als zeitlich schneller Algorithmus realisierbar ist.

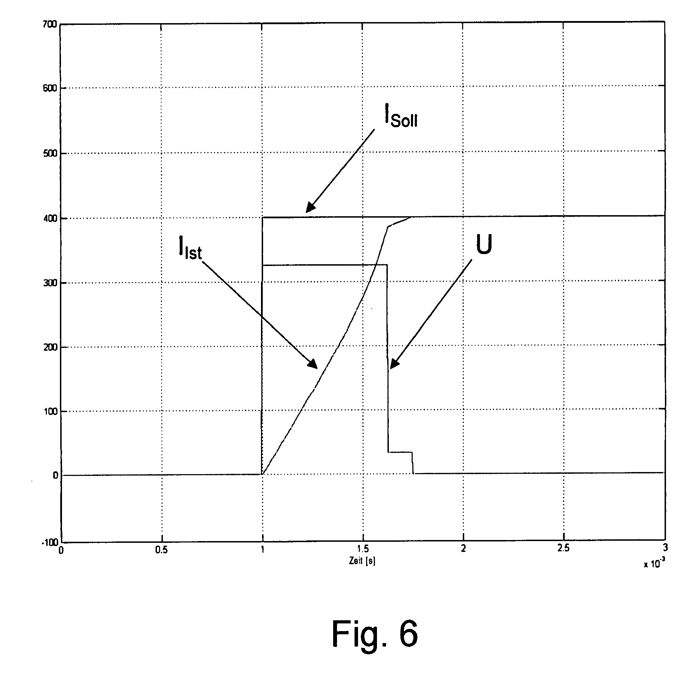

In Figur 6 ist wiederum der Sollwertverlauf I_Soll entsprechend der Figur 2 ausgeführt, wobei der Regler nach Figur 5 verwendet ist und eine Stromabhängigkeit der Induktivität gemäß Figur 3 berücksichtigt ist. Da wiederum die Stellgrenze für die Spannung als Stellwert überschritten wird, benötigt der Istwert des Stromes wiederum einige Zeischritte der zeitdiskreten Regelung bis zum Erreichen des stationären Wertes. Es tritt kein Überschwingen auf, wobei der stationäre Wert trotzdem in sehr kurzer Zeit erreicht ist.

Besonders vorteilig ist diese Regelung anwendbar bei synchronmotoren, welche einen hohen Ausnutzungsgrad aufweisen und daher ein stark sättigendes Verhalten haben. Aber auch bei anderen Motoren ist die Erfindung anwendbar.

Bei weiteren erfindungsgemäßen Ausführungsbeispielen ist als Stellgröße für Spannung zumindest der Betrag des Spannungsvektors der Versorgung des Motors M verwendbar. Alternativ ist aber auch der gesamte Spannungsvektor als Stellgröße verwendbar.

Als Stromkomponente ist insbesondere die drehmomentbildende vorsehbar.

## Patentansprüche

1. Antrieb, umfassend einen Elektromotor, der von einem Umrichter gespeist ist,
   wobei der Umrichter eine zeitdiskrete Regelstruktur umfasst, die den Statorstrom des Elektromotors mittels Stellen der am Motor anliegenden Spannung regelt,
   wobei der Strom des Motors zeitdiskret erfasst wird,
   wobei die Regelstruklur einen ersten Regler umfasst, dessen Sollwert Ausgangswert eines ersten nichtlinearen Übertragungsgliedes
   und dessen Istwert Ausgangswert eines zweiten nichtlinearen Übertragungsgliedes ist,
   wobei der Eingangswert des ersten nichtlinearen Obertragungsgliedes der Sollwert einer ersten Stromkomponente des Stromes ist,
   wobei der Eingangswert des zweiten nichtlinearen Übertragungsgliedes der Istwert einer ersten Stromkomponente des Stromes ist,

   - wobei ein nichtlineares Übertragungsglied einer Übertragungsfunktion entspricht, die ein Funktional der stromabhängigen Induktivität des Motors ist
   - oder wobei ein nichtlineares Übertragungsglied einer Magnetisierungskennlinie des Motors entspricht

2. Antrieb nach mindestens einem der vorangegangenen Ansprüche,
   **dadurch gekennzeichnet, dass**
   das erste und zweite nichtlineare Übertragungsglied gleichartig sind.

3. Antrieb nach mindestens einem der vorangegangenen Ansprüche,
   **dadurch gekennzeichnet, dass**
   das Funktional von der Form

   $$\Phi(I) = \int_{i=0}^{I} L_{diff}(i)\,di$$

   ist, wobei I die Eingangsgröße des Übertragungsgliedes ist.

4. Antrieb nach mindestens einem der vorangegangenen Ansprüche,
   **dadurch gekennzeichnet, dass**
   das Funktional ein Integral der stromabhängigen Induktivität des Motors ist.

5. Antrieb nach mindestens einem der vorangegangenen Ansprüche,
   **dadurch gekennzeichnet, dass**
   der Regler ein linearer Regler, wie P-Regler, ein PI-Regler oder ein PID-Regler, ist, insbesondere mit Vorsteuerung.

6. Antrieb nach mindestens einem der vorangegangenen Ansprüche,
   **dadurch gekennzeichnet, dass**
   aus dem erfassten Strom die Stromkomponenten in einem Koordinatensystem bestimmt werden.

7. Antrieb nach mindestens einem der vorangegangenen Ansprüche,
   **dadurch gekennzeichnet, dass**
   der Umrichter für jede Stromkomponente eine Regelstruktur umfasst, die der Regelstruktur für die erste Stromkomponente gleicht.

8. Verfahren zur Regelung des Motorstromes bei einem von einem Umrichter gespeisten Elektromotor, wobei das Verfahren zeitdiskret ausgeführt wird und der Statorstrom des Motors zeitdiskret erfasst wird,
   wobei der Statorstrom des Elektromotors geregelt wird,
   wobei der Sollwert einer ersten Stromkomponente Eingangswert eines ersten nichtlinearen Übertragungsgliedes ist, dessen Ausgangswert einem Regler als Sollwert zugeführt wird,
   wobei der Istwert einer ersten Stromkomponente Eingangswert eines zweiten nichtlinearen Übertragungsgliedes ist, dessen Ausgangswert dem Regler als Istwert zugeführt wird,
   wobei die Stellgröße des Reglers die am Motor anliegenden Spannung ist,

   - wobei ein nichtlineares Übertragungsglied einer Übertragungsfunktion entspricht, die ein Funktional der stromabhängigen Induktivität des Motors ist

- oder wobei ein nichtlineares Übertragungsglied einer Magnetisierungskennlinie des Motors entspricht.

**Claims**

1. A drive, comprising an electric motor which is supplied by a converter,
   the converter comprising a time-discrete control structure which controls the stator current of the electric motor by means of setting the voltage applied to the motor,
   the current of the motor being detected in time-discrete manner,
   the control structure comprising a first controller, the desired value of which is the output value of a first non-linear transmission element
   and the actual value of which is the output value of a second non-linear transmission element,
   the input value of the first non-linear transmission element being the desired value of a first current component of the current,
   the input value of the second non-linear transmission element being the actual value of a first current component of the current,

   - a non-linear transmission element corresponding to a transmission function which is a composite function of the current-dependent inductivity of the motor,
   - or a non-linear transmission element corresponding to a magnetisation characteristic of the motor.

2. A drive according to at least one of the preceding claims, **characterised in that** the first and second non-linear transmission elements are of the same type.

3. A drive according to at least one of the preceding claims, **characterised in that** the composite function is of the form

$$\Phi(I) = \int\limits_{i=0}^{I} L_{diff}(i)\,di \ ,$$

I being the input variable of the transmission element.

4. A drive according to at least one of the preceding claims, **characterised in that** the composite function is an integral of the current-dependent inductivity of the motor.

5. A drive according to at least one of the preceding claims, **characterised in that** the controller is a linear controller, such as a P controller, a PI controller or a PID controller, in particular with precontrol.

6. A drive according to at least one of the preceding claims, **characterised in that** the current components in a coordinate system are determined from the detected current.

7. A drive according to at least one of the preceding claims, **characterised in that** the converter for each current component comprises a control structure which is similar to the control structure for the first current component.

8. A method for controlling the motor current in an electric motor which is supplied by a converter,
   the method being carried out in time-discrete manner and the stator current of the motor being detected in time-discrete manner,
   the stator current of the electric motor being controlled,
   the desired value of a first current component being the input value of a first non-linear transmission element, the output value of which is supplied to a controller as desired value,
   the actual value of a first current component being the input value of a second non-linear transmission element, the output value of which is supplied to the controller as actual value,
   the controlled variable of the controller being the voltage applied to the motor,

   - a non-linear transmission element corresponding to a transmission function which is a composite function of the current-dependent inductivity of the motor,
   - or a non-linear transmission element corresponding to a magnetisation characteristic of the motor.

**Revendications**

1. Entraînement, comprenant un moteur électrique qui est alimenté par un variateur de vitesse,
   le variateur de vitesse comprenant une structure de régulation en temps discret qui régule le courant de stator du moteur électrique par réglage de la tension appliquée au moteur,
   le courant du moteur étant détecté en temps discret,
   la structure de régulation comprenant un premier régulateur dont la valeur de consigne est la valeur de sortie d'un premier élément de transmission non linéaire
et donc la valeur réelle est la valeur de sortie d'un deuxième élément de transmission non linéaire,
la valeur d'entrée du premier élément de transmission non linéaire étant la valeur de consigne d'une première composante de courant du courant,
la valeur d'entrée du deuxième élément de transmission non linéaire étant la valeur réelle d'une première composante de courant du courant,

- un élément de transmission non linéaire correspondant à une fonction de transmission qui est une fonction de l'inductance du moteur dépendante du courant
- ou un élément de transmission non linéaire correspondant à une courbe caractéristique de magnétisation du moteur.

2. Entraînement selon au moins une des revendications précédentes,
   **caractérisé en ce**
   **que** le premier et le deuxième éléments de transmission non linéaire sont de même nature.

3. Entraînement selon au moins une des revendications précédentes,
   **caractérisé en ce**
   **que** la fonction est de la forme

$$\Phi(I) = \int_{i=0}^{I} L_{diff}(i)\,di$$

où I est la grandeur d'entrée de l'élément de transmission.

4. Entraînement selon au moins une des revendications précédentes,
   **caractérisé en ce**
   **que** la fonction est une intégrale de l'inductance du moteur dépendante du courant.

5. Entraînement selon au moins une des revendications précédentes,
   **caractérisé en ce**
   **que** le régulateur est un régulateur linéaire comme un régulateur P, un régulateur PI ou un régulateur PID, en particulier à commande anticipée.

6. Entraînement selon au moins une des revendications précédentes,
   **caractérisé en ce**
   **que** les composantes de courant sont déterminées dans un système de coordonnées à partir du courant détecté.

7. Entraînement selon au moins une des revendications précédentes,
   **caractérisé en ce**
   **que** le variateur de vitesse comprend pour chaque composante de courant une structure de régulation qui ressemble à la structure de régulation pour la première composante de courant.

8. Procédé de régulation du courant de moteur pour un moteur électrique alimenté par un variateur de vitesse,
   le procédé étant exécuté en temps discret et le courant de stator du moteur étant détecté en temps discret,
   le courant de stator du moteur étant régulé,
   la valeur de consigne d'une première composante de courant étant la valeur d'entrée d'un premier élément de transmission non linéaire dont la valeur de sortie est amenée à un régulateur en tant que valeur de consigne,
   la valeur réelle d'une première composante de courant étant la valeur d'entrée d'un deuxième élément de transmission non linéaire dont la valeur de sortie est amenée au régulateur en tant que valeur réelle,
   la grandeur réglante du régulateur étant la tension appliquée au moteur,

   - un élément de transmission non linéaire correspondant à une fonction de transmission qui est une fonction de l'inductance du moteur dépendante du courant
   - ou un élément de transmission non linéaire correspondant à une courbe caractéristique de magnétisation du moteur.

Fig. 1

EP 2 050 186 B1

Fig 2

Fig. 3

EP 2 050 186 B1

Fig. 4

EP 2 050 186 B1

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0179356 A
- DE 1941312
- DE 19532477 A1
- DE 199752 C1
- DE 10300953 A1